# EUROPEAN PATENT SPECIFICATION

(11) **EP 2 749 408 B1**
(45) Date of publication and mention of the grant of the patent: **16.11.2016**
(21) Application number: 12397534.4
(22) Date of filing: 28.12.2012
(51) Int. Cl.: B32B 7/06, B32B 7/12, B32B 21/04, B32B 21/14, B32B 27/08, B32B 27/32, B32B 27/34, B32B 27/42

(54) **A coated plywood panel and a method for manufacturing the same**
Beschichtete Sperrholzplatte und Herstellungsverfahren dafür
Panneau de contreplaqué revêtu et son procédé de fabrication

(43) Date of publication of application: 02.07.2014
(73) Proprietor: UPM-Kymmene Wood Oy, 15140 Lahti (FI)
(72) Inventor: Marttila, Pasi, 15540 Villähde (FI); Liimatainen, Juhana, 54800 Savitaipale (FI); Rinne, Kimmo, 15950 Lahti (FI); Rautiainen, Raija, 15160 Lahti (FI); Nikulainen, Jori, 57200 Savonlinna (FI)
(74) Representative: Tampereen Patenttitoimisto Oy

(56) References cited:
- WO-A1-2011/051565
- US-A1- 2004 013 889
- DATABASE WPI Week 197808 Thomson Scientific, London, GB; AN 1978-15090A XP002697243, & JP S53 3507 A (SUMITOMO BAKELITE CO) 13 January 1978 (1978-01-13) -& DATABASE CA [Online] CHEMICAL ABSTRACTS SERVICE, COLUMBUS, OHIO, US; "Plywood with reinforced facing", XP002697281, retrieved from STN Database accession no. 88:193144
- DATABASE WPI Week 200062 Thomson Scientific, London, GB; AN 2000-642147 XP002697244, & JP 2000 248244 A (SEKISUI CHEM IND CO LTD) 12 September 2000 (2000-09-12)

## Description

### Field of the Invention

This invention relates to plywood panels. This invention relates to protecting plywood panels. This invention relates to protecting devices used for producing plywood panels. This invention relates to a method for attaching a plywood panel to a support using adhesive. This invention relates to a method for manufacturing a plywood panel.

### Background of the Invention

Plywood panels are known. Often plywood panels become dirty, i.e. soil, during transportation or during manufacturing. When using plywood panels, in some applications the dirt should be removed prior the intended use. Dirt may e.g. be visually unattractive, whereby it needs to be removed in applications requiring good visual quality. Moreover, dirt deteriorates the adhesion between a plywood panel a support, particularly when a panel is fixed to a support using adhesive. Cleaning, i.e. removing the dirt, may slow down the process in which such panels are used.

In this respect, the document JP53003507 discloses a reinforced plywood panel. Epoxy resin may be used as reinforcing material. The document also discloses a method for manufacturing such a panel.

US2004/0013889 discloses a sandwich type board that is comprised of several successive layers and has an outside film on the top side of a transparent acrylic type polymer.

JP2000-248244 discloses a surface protection film consisting of a base material sheet molded from a thermoplastic resin and a pressure sensitive adhesive layer laminated on one surface of the base material sheet. The surface protection film exhibits excellent adhesion to adherends already in the initial stage of application and after a long passage of application time it can be removed.

### Summary of the Invention

A purpose of the present invention is to provide a plywood panel that is easy to clean. Accordingly, a plywood panel is presented, from which the dirt is rapidly removed. An embodiment of a plywood panel comprises
- a first veneer layer comprising wood,
- a second veneer layer comprising wood,
- adhesive in between the first veneer layer and the second veneer layer,
- on a first side of the plywood panel, a first polymer layer attached to the first veneer layer or the second veneer layer and having a first side and a second side such that
- the first and the second veneer layers are arranged on the first side of the first polymer layer, the plywood panel further comprising
- a second polymer layer attached to the second side of the first polymer layer, wherein
- at least part of the second polymer layer is removable from the first polymer layer; and the panel further comprises, on a second side of the panel
- a third polymer layer attached to the second veneer layer or the first veneer layer, respectively, and having two sides such that the first veneer layer and the second veneer layer are arranged on a first side of the third polymer layer.

The plywood panel can be cleaned by removing at least part of the second polymer layer.

The plywood panel may be used in various applications. A use of the plywood panel comprises
- removing at least part of the second polymer layer to expose a clean area of the first polymer layer and
- attaching the clean area of the first polymer layer to a structure using adhesive.
In a use, the structure is a frame of a vehicle.

Another use comprises
- sawing or machining the plywood panel to remove material from the plywood panel and
- removing at least part of the second polymer layer after removing the material.

A method for manufacturing such a plywood panel is disclosed. An embodiment of the method comprises
- arranging available a first veneer layer comprising wood,
- arranging available adhesive,
- arranging a second veneer layer comprising wood, such that the adhesive is left in between the first veneer layer and the second veneer layer,
- arranging a first polymer layer comprising a first side and a second side such that the first veneer layer and the second veneer layer are arranged on the first side of the first polymer layer,
- arranging a second polymer layer on the second side of the first polymer layer in such a way that at least part of the second polymer layer is removable from the first polymer layer,
   arranging a third polymer layer to the first veneer layer or the second veneer layer such that the first veneer layer and the second veneer layer are left in between the third polymer layer and the first polymer layer, and
- hot pressing a structure comprising at least the first veneer layer, the adhesive, and the second veneer layer at a temperature under a pressure for a time.

In an embodiment, the temperature in the hot pressing is from 0 °C to 200 °C, the pressure is from 0.001 MPa to 4 MPa, and the time is from 0.1 s to 10h.

### Description of the Drawings

- Fig. 1a: shows, in a perspective view, a plywood panel,
- Fig. 1b: shows, in a side view, the plywood panel of Fig. 1 a,
- Fig. 1c: shows, in a side view, a plywood panel comprising a polymer layer,
- Fig. 2a: shows, in a side view, a plywood panel,
- Fig. 2b: shows, in a side view, the removal of a polymer layer from a plywood panel,
- Fig. 2c: shows, in a side view, a plywood panel according to an embodiment of the invention,
- Fig. 3a: shows, in a side view, the removal of a polymer layer from the panel of Fig. 2a, and attaching a structure to the exposed area by using adhesive,
- Fig. 3b: shows, in a side view, the removal of two polymer layers from the panel of Fig. 2c, and attaching two structures structure to the exposed areas by adhesive,
- Fig. 4a1: shows, in a side view, forming a structure from layers,

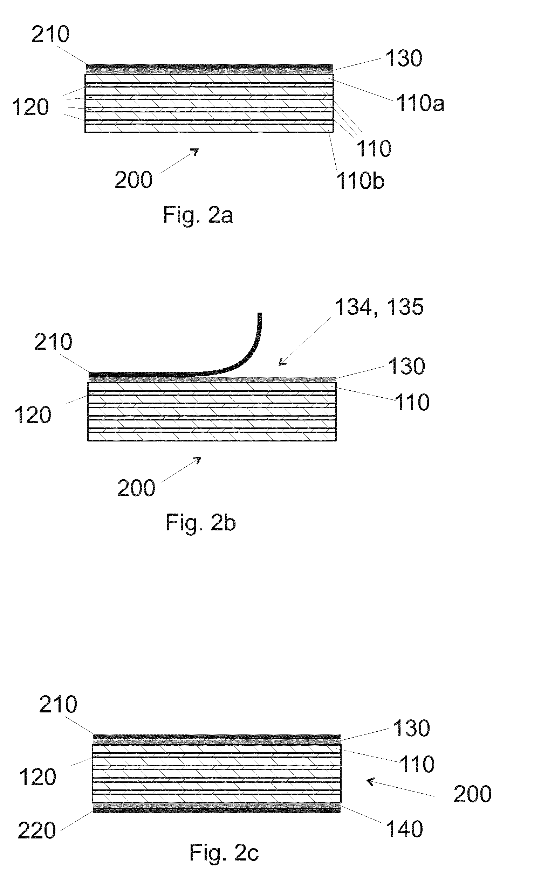

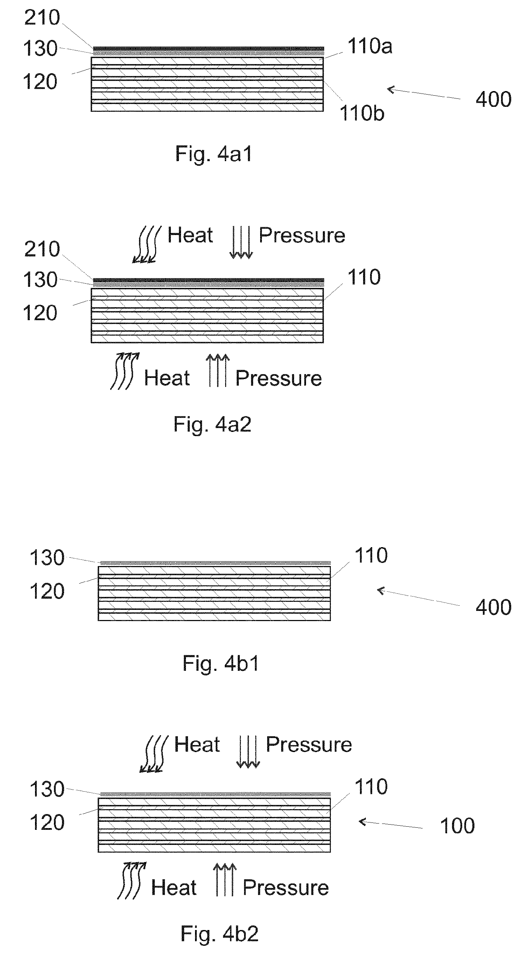

- Fig. 4a2: shows, in a side view, hot pressing the structure of Fig. 4a1 to produce a panel of Fig. 2a,

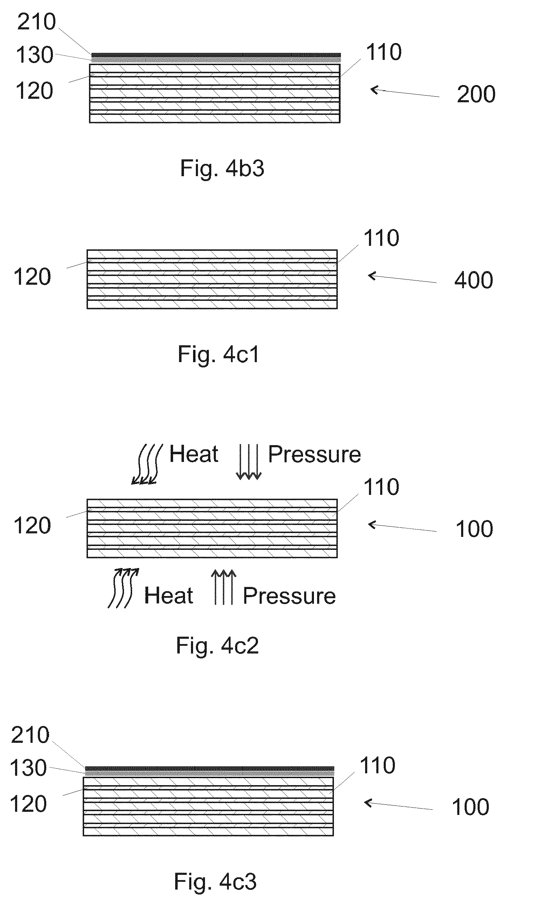

- Fig. 4b1: shows, in a side view, forming a structure from layers,

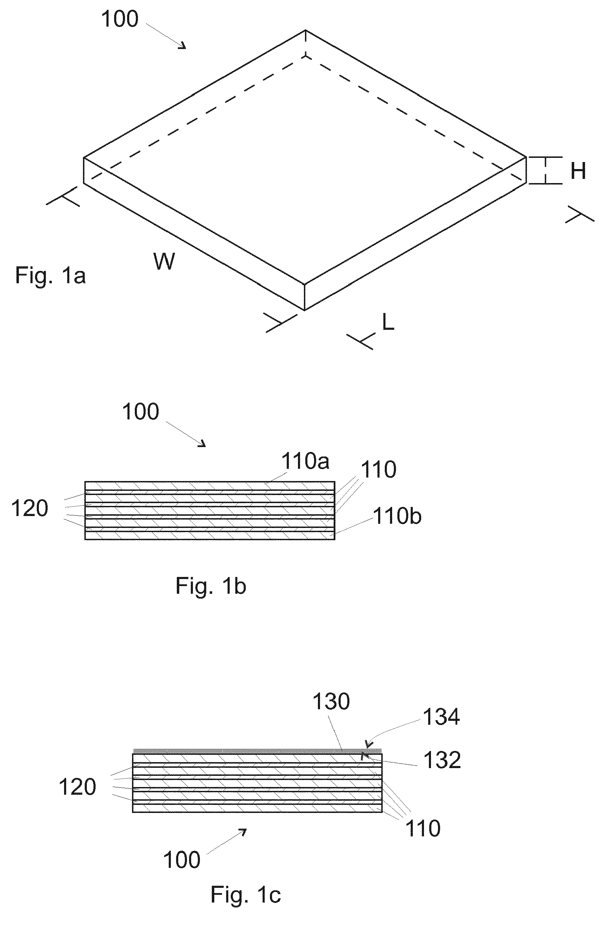

- Fig. 4b2: shows, in a side view, hot pressing the structure of Fig. 4b1 to produce a panel of Fig. 1 c,
- Fig. 4b3: shows, in a side view, arranging a second polymer layer to the panel of Fig. 4b2 to produce a panel of Fig. 2b,
- Fig. 4c1: shows, in a side view, forming a structure from layers,
- Fig. 4c2: shows, in a side view, hot pressing the structure of Fig. 4b1 to produce a panel of Fig. 1 b,
- Fig. 4c3: shows, in a side view, arranging a first and a second polymer layer to the panel of Fig. 4c2 to produce a panel of Fig. 2b,

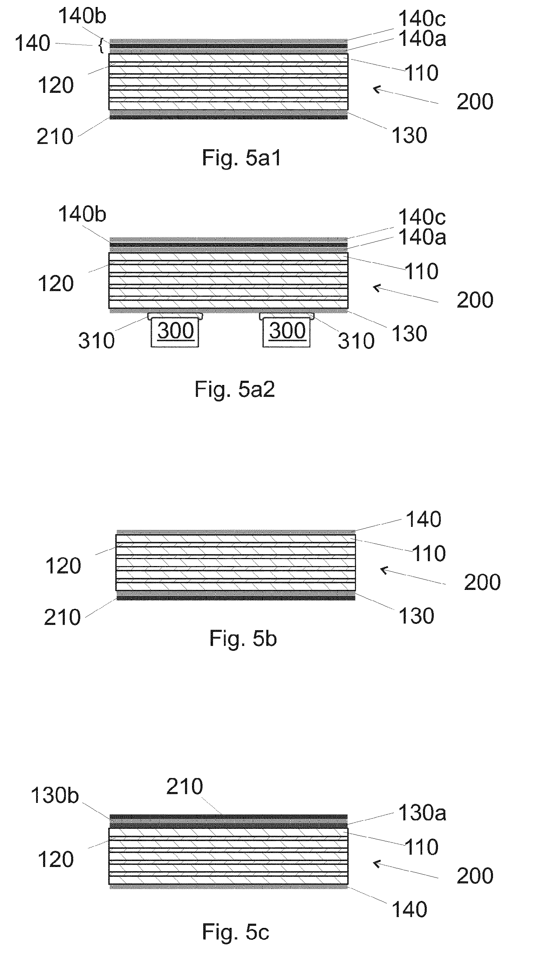

- Fig. 5a1: shows, in a side view, a panel according to an embodiment of the invention,
- Fig. 5a2: shows, in a side view, a use of the panel of Fig. 5a1,
- Fig. 5b: shows, in a side view, a panel according to an embodiment of the invention,
- Fig. 5c: shows, in a side view, a panel according to an embodiment of the invention, and

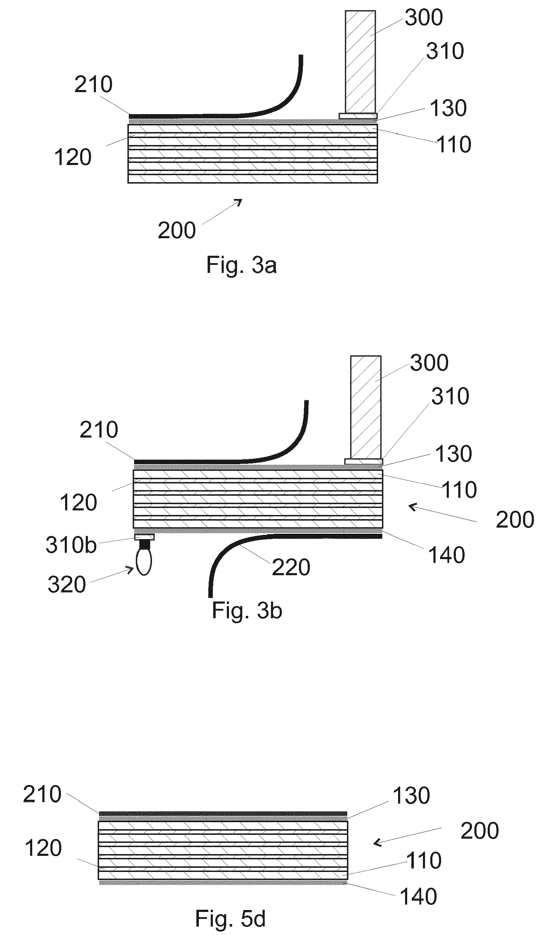

- Fig. 5d: shows, in a side view, a panel according to an embodiment of the invention.

### Detailed Description of the Invention

Plywood panels are known. Often plywood panels become dirty, i.e. soil, during transportation or during manufacturing. A plywood panel may adhere dirt e.g. in at least one of the following:
- During hot pressing. Hot pressing may emit different kinds of releasing agents that may adhere onto a plywood panel.
- During transportation. Oil, grease, and different kinds of dusts can adhere on the panel during transportation. These materials can adhere as dirt on to the panel, thereby deteriorating the adhesion properties of the panel.
- During storage. When panels are stacked, at least some of the materials of the plywood emit sodium acetate which is the salt of acidic acid. This acetate can adhere as dirt on to the panel, thereby deteriorating the adhesion properties of the panel.
- During edge sealing of the panels. During the edge sealing, paint or lacquer may penetrate in between the panels. This paint or lacquer may need to be removed mechanically before using the panel.
- Processing the panel. Plywood panels may soil during processing, such as in machining, e.g. sawing or CNC machining. Sawdust may adhere on the surfaces. This dirt reduces the adhesive and/or visual properties of the plywood panel.

When using plywood panels, in some applications the dirt should be removed prior the intended use. Dirt may e.g. be visually unattractive, whereby it needs to be removed in applications requiring good visual quality. Moreover, dirt deteriorates the adhesion between a plywood panel a support, particularly when a panel is fixed to a support using adhesive. Cleaning, i.e. removing the dirt, may slow down the process where such panels are used.

In addition or alternatively to dirt, a surface of a plywood panel may wear during transportation. E.g. scratches and/or holes may be produced to a surface of the panel. Such scratches or holes also deteriorate the visual appearance.

In addition or alternatively to dirt and/or wearing, a surface of a plywood panel may be exposed to humidity. The humidity may be absorbed to the plywood panel as moisture. Moisture e.g. swells the plywood panel, and in this way deteriorates it properties. E.g. altering humidity exposes the panel to altering swelling stress, which fatigues the panel.

Figure 1a shows, in a perspective view, a plywood panel 100. The dimensions of the panel are depicted in the figure. Typically the width W is from 10 cm to 15 m. Typically the length L is from 10 cm to 15 m. Typically the thickness H is from 0.5 mm to 150 mm. In this way, the surface area of the largest surface of the panel is typically from 0.01 m² to 100 m², such as from 0.1 m² to 10 m². These and the later measures of the panel 100 or a preform thereof apply also to a plywood panel 200 (Fig. 2a) comprising polymer layers.

The size of the panel depends on the manufacturing phase. In a typical manufacturing process, large panels (referred later to as preforms), are initially manufactured by hot pressing. Thereafter, the large panel (i.e. the preform) is sawed to smaller panels according to their intended use. For clarity, the panel before sawing will be referred to a preform. However, the preform itself is a (large) panel. The term panel may refer to a sawed preform or a preform.

The length of a preform is typically about 1.0 m, such as from 600 mm to 1600 mm. However, also longer veneers are possible. E.g. the length may be 100 inches (2540 mm). The width of the preform is typically from 2 m to 15 m, e.g. from 4 m to 12 m. When the veneers 110 (Fig. 1 b) are manufactured by rotary slicing, the length of the rotary slicing device determines the length of the preform. However, by rotary cutting, reasonably wide veneers may be produced. Therefore the term "length" commonly refers to the shorter of these two dimensions. In this way, the surface area of the largest surface of the preform may be from 2.5 m² to 38 m², such as from 4 m² to 15 m².

After sawing, for some uses, the length of the plywood panel may be e.g. from 2 m to 4 m. The width of the panel may be e.g. at least 20 cm, such as about 60 cm or about 100 cm. This applies for use in flooring. For some other uses the length may be e.g. at least 600 mm. In this way, the surface area of the largest surface of the plywood panel may be from 0.1 m² to 4 m², such as from 1.2 m² to 2 m². A plywood panel may also be smaller of larger, as discussed above, depending on the manufacturing phase and/or the use of the panel.

Referring to Fig. 1 b, the plywood panel 100 (or the panel 200, Fig. 2a) comprises layers 110. The panel 100 comprises at least a first veneer layer 110a and a second veneer layer 110b. The first veneer layer 110a comprises wood. The second veneer layer 110b comprises wood. The layers 110 are attached to each other with adhesive 120. Adhesive 120 is arranged in between these veneer layers 110.

The veneer layer 110 that comprises wood may have been manufactured by one of rotary cutting, flat slicing, quarter slicing, half-round slicing, rift cutting, and sawing. These methods are known as such in plywood manufacturing, and different methods result in a slightly different visual appearance of the layer. Rotary cutting may also be referred to as turning or rotary turning. In an embodiment, a layer that comprises wood has been manufactured by rotary cutting. In an embodiment, all the layers that comprise wood have been manufactured by rotary cutting. Rotary cutting results in veneers that have an advantageous thickness and reasonably large size. The thickness of the layer that comprises wood may be from 0.2 mm to 5 mm. In an embodiment the veneer layer comprises birch.

The number of veneer layers 110 that comprise wood, in the panel 100 (or 200, Fig. 2a) is preferably at least three. In this context, the adhesive 120 in between the layers is not considered a veneer layer 110. More preferably, the number of veneer layers 110 may be e.g. at least 5, at least 7, at least 9, at least 11, at least 13, at least 15, or at least 17. In case the layers comprise anisotropic material, such as wood, paper, fiberglass or other fibrous material, the number of veneer layers is preferably odd (i.e. 2N+1, wherein N is an integer). Moreover, the mutual orientation of adjacent layers is in this case is preferably 90 degrees rotated, wherein the orientation of the layer is characterized by the material properties. For example, in plywood the anisotropic layers (veneers) comprising wood are such oriented, and the number of layers is typically odd. The number of layers may be even, e.g. when the panel 100 comprises, in addition to veneer layers comprising wood, other layers comprising other material or other materials.

The adhesive 120 in between the veneer layers 110 comprises polymer. The adhesive may comprise at least one of thermoplastic polymer and thermoset polymer. As will be discussed, a panel 100 may be manufactured by hot pressing a structure. The adhesive 120 may be thermoplastic before hot pressing, but may be at least partly cross linked during hot pressing. The adhesive 120 may be hardened, i.e. cross linked, during hot pressing. The adhesive 120 may be thermoplastic also after hot pressing.

Adhesives 120 that are in thermoplastic form after hot pressing include polyvinyl alcohol, polyolefin, lignin, polyethylene, polypropylene, and copolymers comprising ethylenes and propylenes.

Adhesives 120 that are in at least partly thermoset form after hot pressing include polyester resin, urea-formaldehyde resin, phenol resin, epoxy resin, melamine resin, acrylics, and polycarbonates.

Referring to Fig. 1 c, the panel 100 may be coated on at least one side with a first polymer layer 130. The first polymer layer 130 may comprise the same material as the adhesive 120. The first polymer layer 130 may comprise at least one of polyvinyl alcohol, polyolefin (e.g. thermoplastic polyolefin), lignin, polyethylene, polypropylene, and a co-polymer comprising ethylenes and propylenes. In addition or alternatively, the first polymer layer 130 may comprise at least one of polyester resin, urea-formaldehyde resin, phenol resin, epoxy resin, melamine resin, acrylics, and polycarbonates. In addition, the polymer layer 130 may comprise maleic anhydride, e.g. in combination with polyethylene or polypropylene (i.e. maleic anhydride polyethylene or maleic anhydride polypropylene). In addition or alternatively, the polymer layer 130 may comprise at least one of polyamide, polyurethane, polyvinyl chloride, and ethylene vinyl acetate. The polymer layer 130 may comprise one or more sub-layers. The polymer layer 130 may consist of a number of sub-layers (such as 130a and 130b as depicted in Fig. 5c). The number of sub-layers may be e.g. one, two, three, four, five, or more than five. Thus, the polymer layer 130 may itself be a layered structure.

In some embodiments, the first polymer layer comprises at least one of polypropylene, polyethylene, maleic anhydride polypropylene, maleic anhydride polyethylene, and phenolic resin.

The first polymer layer 130 may comprise adhesive material. The first polymer layer 130 may consist of at least one adhesive material. The first polymer layer 130 may consist of an adhesive material.

The thickness of the first polymer layer is selected such that the first polymer layer 130 provides for sufficient protection for the plywood panel, e.g. from moisture. However, a thick first polymer layer 130 increases the manufacturing costs of the panel. Therefore, preferably, the thickness of the first polymer layer may be e.g. from 0.01 mm to 2 mm. In particular, in an embodiment the first polymer layer 130 comprises thermoplastic material, and the thickness is from 0.05 mm to 2 mm. In particular, in an embodiment the first polymer layer 130 comprises thermoset material, and the thickness is from 0.01 mm to 2 mm.

The first polymer layer 130 has a first side 132 and a second side 134. The second side 134 forms the surface of the panel 100 of Fig. 1c, whereby the first side faces all the layers 110. The first polymer layer 130 is permanently attached to a veneer layer 110. The first polymer layer is permanently attached to a veneer layer, when the first polymer layer can bot be ripped off from the panel. A value for the adhesion strength between the first polymer layer 130 and the first veneer layer 110a or the second veneer layer 110b (whichever is attached to the first polymer layer 130) will be provided later.

The features discussed above are applicable also to a plywood panel 200 comprising a second polymer layer 210 (Figs. 2a to 5d).

If the panel 100 comprises the first polymer layer 130 already before hot pressing, it is possible that a part of the first polymer layer 130 adheres to the hot pressing device. This increases the maintenance need for the hot pressing device.

A first purpose of the present invention is to provide a plywood panel 200 that is easy to clean. A second purpose of the present invention is to provide a plywood panel 200 that can be hot pressed such that the first polymer layer 130 does not adhere to the hot pressing device. Accordingly, a plywood panel 200 is presented, from which the dirt is rapidly removed, and which does not comprise a polymer layer that adheres to the hot pressing device. Referring to Fig. 2a, the plywood panel 200 comprises
- a first veneer layer 110a comprising wood,
- a second veneer layer 110b comprising wood,
- adhesive 120 in between the first veneer layer 110a and the second veneer layer 110b,
- a first polymer layer 130 attached to the first veneer layer 110a or the second veneer layer 110b and having a first side 132 and a second side 134 such that
- the first veneer layer 110a and the second veneer layer 110b are arranged on the first side 132 of the first polymer layer 130, the plywood panel 200 further comprising
- a second polymer layer 210 attached to the second side 134 of the first polymer layer 130, wherein
- at least part of the second polymer layer 210 is removable from the first polymer layer 130.

Here, in the expression "the first veneer layer 110a and the second veneer layer 110b are arranged on the first side 132 of the first polymer layer 130", the term "on" is not restricted to the meaning "above". The veneer layers 110a, 110b may be below the first polymer layer (as in the figure), or the veneer layers 110 may be vertical, or the veneer layers 110 may be arranged in another angle with the horizon.

In an embodiment, the plywood panel 200 comprises further veneer layers 110. In an embodiment, all the veneer layers 110 are arranged on the first side of the first polymer layer 130.

In the plywood panel 200, the first polymer layer 130 is permanently attached to a veneer layer 110. The first polymer layer is permanently attached to a veneer layer, when the first polymer layer can bot be ripped off from the panel. In particular, the adhesion strength between the first polymer layer 130 and the first veneer layer 110a or the second veneer layer 110b (whichever is attached to the first polymer layer 130) is greater than the adhesion strength between a second polymer layer 200 and the first polymer layer 130.

The second polymer layer 210 comprises a surface of the panel 200. Thus, when this surface of the panel becomes dirty, it is the second polymer layer 210 to which the dirt is adhered, not the rest of the plywood panel.

The second polymer layer 210 may be attached to the first polymer layer 130 by suitable adhesive that is arranged in between these layers (not shown in the figure). Alternatively, the first polymer layer 130 may adhere directly to the second polymer layer 210. In case adhesive is used, the adhesion of the adhesive itself is preferably greater to the second polymer layer 210 than to the first polymer layer 130. In this way, at least some of the adhesive is removed from the rest of the panel 200 when at least part of the second polymer layer 210 is removed from the panel 200. As discussed above, the first polymer layer 130 may comprise or consist of at least one adhesive material.

In an embodiment, the whole second polymer layer 210 is removable from the first polymer layer 130. This is particularly true for applications, wherein the dirt should be removed for improved visual appearance. However, for some purposes it suffices that only a part of, or parts of, the second polymer layer 210 is/are removable from the first polymer layer 130. This is particularly true for applications, wherein the dirt should be removed for improved adhesion for adhesive bonding.

As discussed above, since the second polymer layer is removable from the first polymer layer, the adhesion strength between the first polymer layer 130 and the first veneer layer 110a or the second veneer layer 110b (whichever is attached to the first polymer layer 130) is selected such that the first polymer layer 130 is not removed from the first veneer layer 110a or the second veneer layer 110b by the removal of the second polymer layer 210. Therefore, in an embodiment, the plywood panel 200 has
- a first adhesion strength between the second polymer layer 210 and the first polymer layer 130 and
- a second adhesion strength between the first polymer layer 130 and the first veneer layer 110a or the second veneer layer 110b (whichever is attached to the first polymer layer 130), wherein
- the second adhesion strength is greater than the first adhesion strength.
In an embodiment, the second adhesion strength, i.e. the adhesion strength between the first polymer layer 130 and the first veneer layer 110a or the second veneer layer 110b (whichever is attached to the first polymer layer 130), is greater than 1.5 N/mm. Preferably, the second adhesion strength is greater than 10 N/mm.

The second polymer layer 210 is arranged to delaminate from the first polymer layer 130, by proper selection of the (first) adhesion strength of the attachment between these polymer layers. On one hand, preferably the second polymer layer 210 is removable from the first polymer layer 130 with fingers (i.e. without tools). This correspond to an adhesion strength (i.e. the first adhesion strength, as discussed above) of at most 1.5 N/mm, preferably at most 0.9 N/mm. On the other hand, preferably the adhesion strength is not too low to ensure stacking of multiple panels to a pile. If the first adhesion strength was very low, the second polymer layers 210 could be ripped off when stacking panels 200 onto each other. Thus, in some embodiments the first adhesion strength is at least 0.05 N/mm. Preferably, and in some embodiments, the first adhesion strength is at least 0.1 N/mm. In some embodiments, the adhesion strength between the first polymer layer 130 and the second polymer layer 210 is from 0.05 N/mm to 1.5 N/mm. In some of these embodiments, this first adhesion strength is from 0.1 N/mm to 0.9 N/mm.

The values of the adhesion strength correspond to release force measurements. The release force measurements are described in the standard ISO 4578 (referring to the latest public version on 20^{th} December 2012). In a release force measurement, the second polymer layer 210 is detached from the first polymer layer 130 at an angle 90 degrees. The release force measurements are performed at room temperature (from 15 to 30 degrees C). The force needed to peel the second polymer layer depends on the width of the opening. The release force is therefore given in proportion to the width of the opening. In the measurement, a sample having the width 25 mm is used. The second polymer layer is detached from the first polymer layer at a constant speed. Similar adhesion tests are well known for adhesives, such as the Finat FTM2 method (referring to the latest public version on 20^{th} December 2012). The samples were prepared as described in the standard SFS-EN 204 (referring to the latest public version on 20^{th} December 2012).

The adhesion strength may be affected by the selection of materials and/or the process parameters. In an embodiment, wherein the adhesion between the second polymer layer 210 and the first polymer layer 130 is achieved during the hot pressing, the temperature during hot pressing affects the adhesion strength. Generally the higher the process temperature, the higher the adhesion strength.

Fig. 2b shows the removal of the second polymer layer 210. By the removal of the second polymer layer 210, all the dirt adhered on to the surface of the second polymer layer 210 will also be removed from the panel 200. In this way, a clean area 135 of the rest of the panel 200 will be exposed. As depicted of in Fig. 2b, the clean are 135 is a part of the second side 134 of the first polymer layer 130 (cf. also Fig. 1 c).

The second polymer layer 210 comprises at least one of
- a thermoset polymer, and
- a thermoplastic polymer, such as polypropylene (PP), maleic anhydride polypropylene (MAPP), polyethylene (PE), maleic anhydride polyethylene (MAPE), and polyamide (PA).

The second polymer layer 210 may further comprise comprises at least one of
- polymer additives, and
- fibrous materials, such as paper.

In some embodiments, the second polymer layer 210 comprises at least one of polypropylene (PP), polyethylene (PE), and polyamide (PA).

The second polymer layer 210 may consist of one layer, or it may comprise multiple sub-layers. The second polymer layer 210 may comprise at least one sub-layer. The second polymer layer 210 may consist of a number of sub-layers. The number of sub-layers may be e.g. one, two, three, four, five, or more than five. One sub-layer may comprise a first material, such as one of the materials for the second polymer layer 210 as listed above. Another sub-layer may comprise a second material, such as one of the materials for the second polymer layer 210 as listed above, wherein the second material is different from the first material

The second polymer layer 210 may comprise e.g. paper and polymer. In an embodiment, the second polymer layer 210 is a layered structure comprising a first sub-layer comprising polymer and a second sub-layer comprising paper. The second polymer layer 210 may be arranged in the panel 200 such that the first sub-layer of the second polymer layer 210 faces the first polymer layer 130.

The second polymer layer 210 may comprise adhesive material. The second polymer layer 210 may consist of at least one adhesive material. The second polymer layer 210 may consist of an adhesive material.

In an embodiment, a surface of the second polymer layer 210 is free from reactive groups. This reduces the adhesion between the first polymer layer 130 and the second polymer layer 210 to a reasonably level. In an embodiment, a surface of the second polymer layer 210 is free from reactive hydroxyl (OH) groups.

In contrast, the first polymer layer may 130 comprise reactive groups to attach the first polymer layer to the first or the second veneer layer 110a, 110b. A first polymer layer 130 comprising reactive groups may comprise at least one of maleic anhydride polypropylene (MAPP) and maleic anhydride polyethylene (MAPE). When a second polymer layer 210 that is free from reactive groups is removed from a first polymer layer comprising reactive groups, the reactive groups of the clean area 135 of the first polymer layer are exposed. Many adhesives adhere well to such a surface. In addition to MAPP and MAPE, phenolic resin is known to adhere well to wood or wooden veneers. Moreover, polyurethane adhesive adheres well to phenolic resin. For the strong adhesion to wood, in some embodiments the first polymer layer 130 comprises at least one of maleic anhydride polypropylene, maleic anhydride polyethylene, and phenolic resin. In an embodiment, the first polymer layer 130 comprises MAPP, MAPE, and phenolic resin. The maleic anhydride adheres well to wood, and the phenolic resin protects the anhydride layers. In an embodiment, the first polymer layer 130 comprises MAPP and MAPE. In this embodiment, the second polymer layer 210 may be free of reactive groups as discussed above. In an embodiment, the first polymer layer 130 comprises phenolic resin. A panel according to this embodiment may be adhesively attached using an adhesive comprising polyurethane, whereby such the adhesion between the first polymer layer 130 and a support is good.

Polyurethane (PU) adhesives, in particular, have been found to be extremely sensitive to the cleanliness of the surface that is adhesively bonded. Polyurethane adhesives (e.g. adhesive 310, Fig. 3a) may be used when the exposed area 135 (Fig. 2b) comprises phenolic resin. Thus cleaning, e.g. by the removal of the second polymer layer, is required for bonding with an adhesive comprising PU. If not cleaned, the surface could (and often does) comprise release agents used in the manufacturing of the panel. However, also in general, cleaning improves the strength of the adhesive bond between two objects, such as the panel 200 and the support 300.

In an embodiment, the first polymer layer 130 comprises the same material as the adhesive 120. This makes the handling of materials simpler and also simplifies the manufacturing process, as the adhesive 120 and the first polymer layer 130 can be processes using same parameters (temperature, pressure, and/or time). For example, in an embodiment, both the adhesive 120 and the first polymer layer 130 comprise MAPE. For example, in an embodiment, both the adhesive 120 and the first polymer layer 130 comprise MAPP. For example, in an embodiment, both the adhesive and the first polymer layer 130 comprise phenolic resin.

The second polymer layer 210 may comprise a relatively soft sub-layer. The Shore (D) hardness of the soft sub-layer may be e.g. at most 75, preferably at most 70. The soft sub-layer may be used to provide some elasticity in a pile of panels. When transporting a pile of panels, elasticity in between the panels allows for some accelerations of the pile such that the faces of the panels do not move with respect to each other. Thus, in a altering acceleration conditions, such as vibrations or accelerations due to road bumps, the softness enables small deformations of the second polymer layers 210, whereby the pile of panel is more resistant to alternating mechanical stress during transport.

The second polymer layer 210 may comprise material that is recyclable. The second polymer layer 210 may comprise e.g. thermoplastic material, whereby the layer 210 may be recycled as plastic material. The second polymer layer 210 may comprise e.g. thermoset material, whereby the layer 210 may be recycled as a plastic film.

Even if the second polymer layer 210 can be recycled, it may be economically beneficial to make only a thin removable layer 210. The thickness of the second polymer layer may be e.g. at least 0.01 mm, at least 0.02 mm or at least 0.05 mm. In some embodiments, the thickness of the second polymer layer 210 is at most 2 mm, at most 1.5 mm or at most 0.5 mm. The thickness may be within a range from a lower limit to an upper limit. The thickness may be selected according to the material and the requirement for the tearing strength.

It has also been found that the second polymer layer 210 may decrease the scratch hardness of the first polymer layer 130, particularly, if the first polymer layer comprises phenol resin. Since the second polymer layer 210 protects the first polymer layer 130 from scratching, the decrement of scratch hardness does not deteriorate the properties. Instead, provided that more roughness is needed for adhesive bonding, the clean surface 135 may be ground before applying adhesive. Grinding is easier to perform, in case the scratch hardness of the first polymer layer 130 is not high.

Scratch hardness may be measured using an Erichsen test pencil. In the test, a test pencil is applied to a surface using a force, and the pencil is moved with respect to the surface. In the test, the smallest force that can be used to scratch the surface is determined. The presence of a scratch is determined by a naked eye. The force depends on the test pencil and the scratch hardness of the surface.

In the present application, the scratch hardness is defined as the scratch hardness in the aforementioned test using an Erichsen pencil 40189/94 (model 318). This pencil comprises a head having the a diameter of 0.75 mm. The head of the pencil is rounded. Thus, the tip of the pencil has the shape of a hemi-sphere having the diameter of 0.75 mm. The tip of the pencil is fixed, so that it is not arranged to rotate; to form the scratch. The tip of the pencil is made of strong material. A pencil comprises tungsten carbide spheres. Therefore the tip of the pencil is hard. It was observed that the scratch hardness of an exposed area 135 was in the range from 1 N to 10 N. Preferably, the scratch hardness of an exposed area 135 is in the range from 1.5 N to 5 N. The scratch hardness of a comparative surface comprising phenolic resin is typically about 20 N or more.

In some embodiments the second polymer layer 210 is heat resistant to all temperatures below 200°C. In some embodiments the second polymer layer 210 is heat resistant to all temperatures above -60°C (above minus 60°C). In some embodiments the second polymer layer 210 is heat resistant to all temperatures above -30°C. Preferably the second polymer layer 210 is heat resistant temperatures up to 160°C. Preferably the second polymer layer 210 is heat resistant temperatures up to 145°C. In some embodiments the second polymer layer 210 is heat resistant to all temperatures above -25°C. Preferably the second polymer layer is heat resistant to all temperatures between -30°C and 200°C. The resistance to heat is preferred in order to protect the hot pressing device from the first polymer layer 130, as discussed above.

The second polymer layer 210 preferably
- is heat resistant up to 145°C or 200°C without any adhesion to hot pressing part, such as metal plates,
- is resistant to scratches also in hot stages,
- has good adhesion to first polymer layer 130 or the adhesive in between the second polymer layer 210 and the first polymer layer 130, also in hot stages (temperature at least 100°C), wherein the good adhesion is sufficient to bond the second polymer layer 210 such that the second polymer layer 210 does not rip off in subsequent processes such as
   o transporting and/or moving, and
   o storing to piles,
- has good adhesion between to first polymer layer 130 or the adhesive in between the second polymer layer 210 and the first polymer layer 130 also in cold stages (temperature less than 100°C), wherein the good adhesion is sufficient to bond the second polymer layer 210 such that the second polymer layer 210 does not rip off in subsequent processes such as
   ∘ sawing,
   ∘ machining (e.g. compute numerical control, CNC, processing)
   ∘ transporting and/or moving,
- has good adhesion between to first polymer layer 130 or the adhesive in between the second polymer layer 210 and the first polymer layer 130 such that also the edge of the panel 200 is protected,
- has sufficient tearing strength such that the second polymer layer can be ripped off from the panel 200, and
- has sufficient moisture resistance, e.g. is water proof or humid proof.

Preferably, the sufficient tearing strength is sufficiently high to withstand tearing. As mentioned elsewhere, the adhesion strength between the second polymer layer 210 and the first polymer layer 130 may be e.g. at most 1.5 N/mm or 0.9 N/mm. Thus, in an embodiment, the tearing strength of the second polymer layer 210 is selected such that the second polymer layer 210 withstands tearing from a surface, wherein the adhesion strength between the second polymer layer 210 and the surface is at most 1.5 N/mm. In another embodiment, the tearing strength of the second polymer layer 210 is selected such that the second polymer layer 210 withstands tearing from a surface, wherein the adhesion strength between the second polymer layer 210 and the surface is at most 0.9 N/mm.

The second polymer layer 210 can be detached from the first polymer layer 130, alternatively to tearing, by use of pressurized air or other gas. Thus, when a small portion of the second layer is detached, pressurized gas may be directed to the exposed area 135 (i.e. the clean are 135), whereby the gas detaches the second layer from the first layer. In this embodiment, the tearing strength of the second polymer layer 210 may be lower.

The waterproofness of the second polymer layer 210 may be characterized e.g. by the IP level 2. The IP code in the IP level refers to the Ingress Protection Rating, i.e. International Protection Rating. It is defined in the standard ANSI/IEC 60529-2004 (approved November 3, 2004). Thus the layer 210 may be waterproof against water equivalent to 3 mm rainfall per minute, at least for 10 minutes. Another possibility to characterize waterproofness is to assume that wetting occurs by Fickian diffusion. For example, the diffusion coefficient for some polymers that are generally considered water proof are about 3×10⁻¹² m²/s. Preferably, the diffusion coefficient of the second polymer layer 210 is less than 1×10⁻⁶ m²/s. More preferably, the diffusion coefficient of the surface construction is less than 1×10⁻⁹ m²/s. It is noted that the diffusion coefficient is dependent on temperature, and the given limit refers to normal operating temperature of the panel. The normal operating temperature may be e.g. 30 °C. It is noted that in an embodiment also the first polymer layer 130 is water proof or humid proof as described above for the second polymer layer 210.

In this way, the rest of the panel is protected from dirt by the second polymer layer 210 from a first side of the panel 200. A panel 200 may also be protected from dirt by a fourth polymer layer 220 from a second side of the panel 200, as depicted in Fig. 2c. Fig. 2c shows also a third polymer layer 140 arranged on the second side of the panel of Fig. 1c.

These embodiments of the panel comprise
- the third polymer 140 layer attached to the second veneer layer 110b or the first veneer layer 110a (respectively, as the first polymer layer 130 is attached to the first veneer layer 110a or the second veneer layer 110b) and having two sides such that the first and the second veneer layers (110a, 110b) are arranged on a first side of the third polymer layer 140,
- a fourth polymer layer 220 having two sides and attached to one of (i) the second side of the third polymer layer 140, (ii) the first veneer layer 110a, and (iii) the second veneer layer 110b, such that the first polymer layer 130, the second polymer layer 210, the first veneer layer 110a, and the second veneer layer 110b are arranged on a first side of the fourth polymer layer 220, wherein
- the fourth polymer layer 220 is removable from the layer to which it is attached (i.e. the third polymer layer 140 that is optional, the first veneer layer 110a, or the second veneer layer 110b).

The panel 200 comprises a permanent third polymer layer 140, attached to the second veneer layer 110b or the first veneer layer 110a (respectively, as the first polymer layer 130 is attached to the first veneer layer 110a or the second veneer layer 110b); even if the panel does not comprise the removable fourth polymer layer 220.

The adhesion strength between the fourth polymer layer 220 and the third polymer layer 140 may be e.g. from 0.05 N/mm to 1.5 N/mm. In some of these embodiments, this adhesion strength is from 0.1 N/mm to 0.9 N/mm. The adhesion strength between the third polymer layer 140 and a veneer layer (110b, 110a) is greater than the adhesion strength between the fourth polymer layer 220 and the third polymer layer 140.

In an embodiment, the tearing strength of the fourth polymer layer 220 is selected such that the fourth polymer layer 220 withstands tearing from a surface, wherein the adhesion strength between the fourth polymer layer 220 and the surface is at most 1.5 N/mm. In another embodiment, the tearing strength of the fourth polymer layer 220 is selected such that the fourth polymer layer 220 withstands tearing from a surface, wherein the adhesion strength between the fourth polymer layer 220 and the surface is at most 0.9 N/mm.

The third polymer layer 140 may comprise at least one of polyvinyl alcohol, polyolefin (e.g. thermoplastic polyolefin), lignin, polyethylene, polypropylene, and a co-polymer comprising ethylenes and propylenes. In addition or alternatively, the third polymer layer 140 may comprise at least one of polyester resin, urea-formaldehyde resin, phenol resin, epoxy resin, melamine resin, acrylics, and polycarbonates. In addition, the third polymer layer 140 may comprise maleic anhydride, e.g. in combination with polyethylene or polypropylene (i.e. maleic anhydride polyethylene or maleic anhydride polypropylene). In addition or alternatively, the third polymer layer 140 may comprise at least one of polyamide, polyurethane, polyvinyl chloride, and ethylene vinyl acetate. Still further, the third layer may comprise one or more sub-layers. Thus, the third polymer layer may itself be a layered structure. The third polymer layer 140 may comprise the same material(s) as the first polymer layer 130.

The third polymer layer may comprise polymer that comprise reactive groups, as discussed for the first polymer layer. For the strong adhesion to wood, in some embodiments the third polymer layer 140 comprises at least one of maleic anhydride polypropylene, maleic anhydride polyethylene, and phenolic resin.

The fourth polymer layer 220 comprises at least one of
- a thermoset polymer, and
- a thermoplastic polymer, such as polypropylene (PP), maleic anhydride polypropylene (MAPP), polyethylene (PE), maleic anhydride polyethylene (MAPE), and polyamide (PA).

The fourth polymer layer 220 may further comprise comprises at least one of
- polymer additives, and
- fibrous materials, such as paper.

In some embodiments, the fourth polymer layer 220 comprises at least one of polypropylene (PP), polyethylene (PE), and polyamide (PA).

The fourth polymer layer 220 may comprise the same material as the second polymer layer 210. This reduces the number of different materials in the process, and thereby simplifies the manufacturing process of the panel.

The fourth polymer layer 220 may comprise material that is recyclable. The fourth polymer layer 220 may comprise e.g. thermoplastic material, whereby the layer 210 may be recycled as plastic material. The fourth polymer layer 220 may comprise e.g. thermoset material, whereby the layer 220 may be recycled as a plastic film.

Even if the fourth polymer layer 220 can be recycled, it may be economically beneficial to make only a thin layer 220. The thickness of the fourth polymer layer 220 may be e.g. at least 0.01 mm, at least 0.02 mm or at least 0.05 mm. In some embodiments, the thickness of the fourth polymer layer 220 is at most 2 mm, at most 1.5 mm or at most 0.5 mm. The thickness may be within a range from a lower limit to an upper limit. The thickness may be selected according to the material and the requirement for the tearing strength.

The panel 200 may be used in various applications. One attractive use is to attach an exposed clean area 135 to another structure using a second adhesive. The term "second adhesive 310" is only used to distinct the second adhesive 310 from the adhesive 120. Referring to Fig. 3a such a use comprises
- removing at least part of the second polymer layer 210 to expose a clean area 135 of the first polymer 130 layer and
- attaching the clean area 135 of the first polymer layer 130 to a structure 300 using second adhesive 310.

In a preferred embodiment, the structure 300 is a part of a frame of a vehicle or a trailer. A typical frame comprises metal, such as steel. The frame may comprise a metal beam. In this way, the panel 200, from which at least part of the second polymer layer 210 is removed, can be adhesively attached to a frame of a vehicle or a trailer to form a flooring. In addition or alternatively, a wall structure can be formed by adhesive bonding. In addition or alternatively, a ceiling can be formed by adhesive bonding. In a such a use,
- the clean area 135 of the first polymer layer 130 is attached to a frame of a vehicle or a trailer.

In addition to vehicles, the panel 200 can be used similarly in buildings. In an adhesive attachment, the second adhesive 310 is arranged in between a support 300 and the first polymer layer 130. E.g. in a vehicle or a trailer, adhesive 310 is arranged in between the first polymer layer 130 and the frame. In a vehicle or a trailer, the second adhesive 310 preferably comprises polyurethane (PU). The polyurethane adhesive may be a one component adhesive or a two component adhesive. In a one component PU adhesive, the humidity of the ambient works as a hardener for the PU adhesive. In a two component PU adhesive, a hardened for the first component is supplied with the second component.

After removing at least a part of the second polymer layer 210, the clean area 135 of the first polymer layer 130 is exposed. The clean area 135 is free from release agents, since the release agents are removed with the second polymer layer 210. The term "free from release agents" refers to a surface that does not comprise a release agent. A release agent may comprise at least one of silicone, wax (such as paraffin wax or carnauba wax), oil, and grease. Therefore, an embodiment of the use of the panel comprises
- exposing a clean area 135 of the first polymer 130 layer such that
- the clean area 135 is free from release agents such as silicone, wax (such as paraffin wax or carnauba wax), oil, and grease; the use further comprising
- attaching the clean area 135 of the first polymer layer 130 to a structure 300 using second adhesive 310.
The step "exposing a clean area 135" can be performed e.g. by removing the second polymer layer 210. In an embodiment, the structure is a frame. In an embodiment, the second adhesive 310 comprises polyurethane.

A further benefit of the second polymer layer 210 is related to gloss of the exposed area 135 (i.e. clean area 135) of the first polymer layer 130. It has been found that when the second polymer layer 220 is hot pressed to the first polymer layer 130, the second polymer layer 210 and/or its removal affects the gloss of the exposed area 135. The gloss is related to the surface roughness. Moreover, the adhesion of a surface to an adhesive is also related to surface roughness. Therefore, the gloss of the exposed area 135 is also related to the adhesion between the exposed area 135 and the adhesive 310. If the gloss is too high, the adhesion remain low, because the surface roughness is too low. It has been found that the second polymer layer 210 and/or its removal decreases the gloss of the exposed area 135, as compared to manufacturing a plywood panel without the removable second polymer layer 210. In this way the adhesion of the panel according to an embodiment of the invention is better than in a comparative plywood panel. In a comparative panel, the gloss of a clean polymer surface may be e.g. more than 20 GU (Gloss Units).

The gloss describes the ability of a surface, such as the exposed area 135, to reflect light into the specular direction. The gloss may be given e.g. in units of per cent (%), being indicative of the ratio of the intensity of specularly reflected light to the incident light. Often, for clarity, the gloss is given in Gloss Units (GU), which equals to per cent. The gloss can be measured by the reflection of light. Typically the gloss can be measured at different angles of incident, such as 20 degrees, 60 degrees, or 85 degrees. The angle of incident is the angle between the direction of the incident light and the surface normal of the surface of which gloss in measured. In an embodiment of the panel
- the gloss of an exposed area 135 of the first polymer layer 130, wherein the exposed area 135 is exposed by the removal of the second polymer layer 210 from the first polymer layer 130, is at most 15 GU, wherein
- the gloss is measured at an angle of incident of 60 degrees.

In another embodiment, the gloss of the exposed area 135 is at most 10 GU. In this or another embodiment, the gloss of the exposed area 135 is at least 1 GU. Here GU equals per cent (%).

Moreover, the removal of the second polymer layer 210 affects the isotropy of the gloss. Preferably, the adhesion properties of the clean surface are isotropic. In such an isotropic case, the adhesive joint between the panel 200 and the structure 300 (Fig. 3a) is resistant to shearing forces in all directions similarly. Similarly, as discussed above, also the gloss is preferably isotropic. In such a case,
- the gloss of an exposed area 135 of the first polymer layer 130, wherein the exposed area 135 is exposed by the removal of the second polymer layer 210 from the first polymer layer 130, wherein the gloss is measured at an angle of incident of 60 degrees and a first azimuthal angle, has a first value, and
- the gloss of the exposed area 135, wherein the gloss is measured at an angle of incident of 60 degrees and a second azimuthal angle, has a second value, wherein
- the difference between the first azimuthal angle and the second azimuthal angle is from 45 to 135 degrees, preferably from 85 degrees to 95 degrees degrees, and
- the ratio of the second value to the first value if from 0.2 to 5.

Preferably the ratio is from 0.5 to 2. The term "azimuthal angle" is the angle between the projection of the direction of the incident light to the plane of the exposed area and an edge of the panel. In particular, the azimuthal angle is the smaller of the two angles defined by these directions, and therefore at most 180 degrees.

In a comparative panel, the fibre orientation of the veneer layer may affect the properties of the first polymer layer 130, particularly if the first polymer layer is thin. When the (anisotropic) veneer layer 110 affects the gloss of the first polymer layer 130, the adhesion properties will also become anisotropic.

Another use of the panel comprises
- machining the panel 200 to remove material from the panel and
- removing at least part of the second polymer layer 210 after the machining.

During such machining, dust and other particles of the panel easily adhere to the surface of the panel 200 (i.e. to the surface of the second polymer layer 210). In this way dirt is adhered to the panel 200. As discussed, a clean area 135 can be exposed by removing at least a part of the second polymer layer 135. Moreover, the whole second side 134 of the polymer layer 130 can be exposed by removing the second polymer layer 135.

Another use of the panel comprises
- transporting the panel and
- removing at least part of the second polymer layer after transporting.

The transporting refers to transporting in a vehicle. Transporting may refer to transporting on a road, on rails, on sea or in air. Transporting may refer to transporting in an environment that is not controlled. Transporting may refer to transporting the panel outside of a building. Outside of a building the panel is exposed to atmosphere having alternating humidity and temperature. In humid conditions, at least one of the wood material, the adhesive material, and the coating of the plywood panel, alone or in combination, emit sodium acetate, which is the salt of acidic acid. This acetate can adhere as dirt on to the panel, thereby deteriorating the adhesion properties of the panel. Also, the altering temperature may cause humidity to condense on the panels thereby accelerating the formation of sodium acetate. The second polymer layer 210 may protect the panels from sodium acetate and other dirt.

Moreover, the panels may be transported in piles. During transportation, the piles on panels are exposed to accelerations. Thereby the panels may slightly move with respect to each other. These movements may cause the panels to wear, since a panel scratches another panel. The second polymer layer 210 may protect the panels from this scratching and other mechanical wear.

Some embodiments include, in the following order, transporting, machining, and removing the second polymer layer 210. Some embodiments include, in the following order, machining, transporting, and removing the second polymer layer 210. Some embodiments include, in the following order, transporting, machining, transporting, and removing the second polymer layer 210. Details of transporting and machining were discussed above. During the transport, dirt, such as oil or grease, may be adhered to the panel 200. At least part of the panel is easily cleaned after transporting by removing at least part of the second polymer layer.

Embodiments of methods for manufacturing a panel are disclosed in Figs. 4a1 to 4c3. An embodiment of the method comprises
- arranging available a first veneer layer 110a comprising wood,
- arranging available adhesive 120,
- arranging a second veneer layer 110b comprising wood, such that the adhesive 120 is left in between the first veneer layer 110a and the second veneer layer 110b,
- arranging a first polymer layer 130 comprising a first side 132 and a second side 134 such that the first veneer layer 110a and the second veneer layer 110b are arranged on the first side 132 of the first polymer layer 130, and
- arranging a second polymer layer 210 to the second side 134 of the first polymer layer 130.

The first polymer layer 130 may be arranged e.g. on top the first veneer layer 110a or the second veneer layer 110b. The second polymer layer may be arranged e.g. on top the second side 134 of the first polymer layer 130. However, the structure needs not to be layered in the vertical direction, i.e. the layers need not to be horizontal. Moreover, in contrast to Figs. 4a1 to 4c3, the second polymer layer 210 may also be the bottommost layer of the structure.

The embodiment further comprises hot pressing a structure comprising at least the first veneer layer 110a, the adhesive 120, and the second veneer layer 110b in a temperature under a pressure for a time. The term "pressure" refers to surface pressure, i.e. to a force applied to the panel, as divided by the area on which the force acts, wherein the force acts in the (opposite) direction of the surface normal of the panel, and wherein the force is an additional force to the ambient pressure. Thus, the pressure is an overpressure. In an embodiment, the pressure is generated by using a solid object to generate the pressure.

An embodiment of the method comprises arranging available further veneer layers 110, arranging adhesive 120 in between the veneer layers 110, and arranging the first polymer layer 130 such that all the veneer layers 110 are arranged on the first side 132 of the first polymer layer 130. The embodiment comprises hot pressing a structure comprising at least all the veneer layers and the adhesive at a temperature under a pressure for a time.

In an embodiment, the temperature is from 100°C to 200°C. In an embodiment, the pressure is from 0.01 MPa to 4 MPa. In an embodiment, the time is from 0.1 seconds to 10 hours. In an embodiment, the temperature is in the aforementioned range, the pressure is in the aforementioned range, and the time is in the aforementioned range. This applies e.g. for panels 200 that comprise thermoplastic material as the adhesive 120. This applies e.g. for panels 200 that comprise thermoset material as the adhesive 120, wherein the thermoset material hardens in relatively high temperature (at least 100 °C), such as phenolic resin.

In an embodiment, wherein the thermoset material hardens in relatively high temperature (at least 100°C), the adhesive 120 may comprise phenolic resin. The temperature may be e.g. from 110°C to 160°C, such as from 130°C to 145°C, such as about 135°C, or about 140°C. In addition the pressure may be from 1.5 N/mm² to 2.5 N/mm², such as from 2.0 N/mm² to 2.2 N/mm², such as about 2.1 N/mm². (It is noted that the unit N/mm² equals the unit MPa). In addition, the time may be from 5 minutes to 8 minutes, such as from 6 minutes to 7 minutes, such as about 7.5 minutes. However, for a much faster process, a higher temperature, e.g. from 190 °C to 200°C, may be used.

In addition or alternatively, the temperature and the time may be selected such that for a lower temperature a longer time is used. For example, at 200°C, a time from 25 seconds to 35 seconds may be used. At 130°C, a time from 7 minutes to 9 minutes may be used. These times are applicable to reasonable thin polymer layers 130, 140, such as from 0.12 mm to 0.23 mm. In addition, or alternatively, the temperature and the time may be selected such that for a higher temperature a shorter time is used. Moreover, the temperature may affect the adhesion strength between the first polymer layer 130 and the second polymer layer 210, when these layers are hot pressed, as discussed above.

Other values for time as function of temperature include
- at 125°C, time is from 200 s to 650 s,
- at 140°C, time is from 100 s to 350 s,
- at 150°C, time is from 70 s to 250 s,
- at 160°C, time is from 50 s to 200 s,
- at 170°C, time is from 40 s to 90 s, and
- at 180°C, time is from 35 s to 70 s.

Still further, when the first polymer layer 130 or the third polymer layer is thick, a longer time may be needed. A thick layer may refer to layer thickness of more than 1 mm, e.g. from 1 mm to 2 mm. For example a thick polymer layer may require, at the temperature of 135 degrees, a time of 15 minutes.

In an embodiment, the temperature is from 0°C to 200°C. In an embodiment, the pressure is from 0.001 MPa to 1 MPa. In an embodiment, the time is from 0.1 seconds to 10 hours. In an embodiment, the temperature is in the aforementioned range, the pressure is in the aforementioned range, and the time is in the aforementioned range. This applies e.g. for panels 200 that comprise thermoset adhesive 120 that hardens in the specified temperature range.

In the above embodiments, the temperature is from 0 °C to 200°C. In the above embodiments, the pressure is from 0.001 MPa to 4 MPa. In the above embodiment, the time is from 0.1 seconds to 10 hours. In an embodiment, the temperature is in the aforementioned range, the pressure is in the aforementioned range, and the time is in the aforementioned range.

The first polymer layer 130 may be arranged on a first roll. The first polymer layer 130 may be supplied, as a film, from the first roll next to a veneer layer 110, such that the veneer layers are left on a first side of the first polymer layer 130.

The second polymer layer 210 may be arranged on a second roll. The second polymer layer 210 may be supplied, as a film, from the second roll next to the first polymer layer 130, such that the second polymer layer 210 left on a second side of the first polymer layer 130.

Figures 4a1 and 4a2 shows a first embodiment for manufacturing a panel 200. Referring to Fig. 4a1 the embodiment comprises forming a structure 400 by
- arranging available a first veneer layer 110a comprising wood,
- arranging available adhesive 120,
- arranging a second veneer layer 110b comprising wood, such that the adhesive 120 is left in between the first veneer layer 110a and the second veneer layer 110b,
- arranging the first polymer layer 130 comprising a first side 132 and a second side 134 such that the first veneer layer 110a and the second veneer layer 110b are arranged on the first 132 side of the first polymer layer, and
- arranging the second polymer layer 210 to the second side 134 of the first polymer layer 130.

Referring to Fig. 4a1, the embodiment further comprises hot pressing the structure comprising at least the first veneer layer 110a, the adhesive 120, the second veneer layer 110b, the first polymer layer 130 and the second polymer layer 210. The structure may comprise a multiple of other layers 110 and other adhesive layers 120. Furthermore, the structure comprises the third polymer layer 140 and the fourth polymer layer 220 (Fig. 2c). In this embodiment, the panel 200 is produced in a single run. Thus the first and second polymer layers 130, 210 are attached to the structure at substantially the same time as the layers 110 are attached to each other. An embodiment comprises hot pressing a structure comprising all the veneer layers 110, the adhesive 120, the first polymer layer 130m and the second polymer layer 210 at a temperature under a pressure for a time.

In this embodiment, also the second polymer layer 210 is hot pressed. During hot pressing, releasing agents may be used to ensure that the panel 200 is released from the hot pressing device. As motivated above, some of the release agents may be adhered onto the panel. Correspondingly, when a plywood panel is manufactured by this embodiment, the panel comprises
- at least some releasing agent arranged on a first side of the second polymer layer 210, wherein
- the first polymer layer 130 is arranged on the second side of the second polymer layer 210.

As is evident, the also second polymer layer 210 comprises a first side and a second side.

In general, the releasing agent comprises a compound (or compounds) that decrease the adhesion between the hot pressing device and the surface of the panel. The releasing agent may comprise at least one of: silicone, wax (such as paraffin wax or carnauba wax), oil, or grease.

Referring to Figs. 4b1 to 4c1, alternatively only a part of the panel may be hot pressed in a first hot press process. Figs. 4b1 to 4c1 describe embodiments, comprising
- forming a structure 400 by
   ∘ arranging available a first veneer layer 110a comprising wood,
   ∘ arranging available adhesive 120,
   ∘ arranging a second veneer layer 110b comprising wood, such that the adhesive 120 is left in between the first veneer layer 110a and the second veneer layer 110b, and
   ∘ optionally, arranging a first polymer layer 130 comprising a first side 132 and a second side 134 such that the first veneer layer 110a and the second veneer layer 110b are arranged on the first side 132 of the first polymer layer 130.
In the embodiment of Fig. 4b1, the first polymer layer 130 is such arranged. However, in the embodiment of Fig. 4c1, the first polymer layer 130 is not arranged at this phase.

The embodiments of Figs. 4b1 to 4c1 further comprise
- hot pressing the structure in a temperature under a pressure for a time to produce a plywood board (Figs 4b3 and 4c3).

The term "plywood board" here refers to a conventional plywood board without the removable second polymer layer 210 of the plywood panel according to an embodiment of the invention.

The embodiments also comprise
- optionally, arranging a polymer layer to the plywood board. Such a polymer layer is arranged to the plywood board at least if the plywood board does not comprise the first polymer layer 130. If the plywood board, after hot pressing, did not comprise the first polymer layer 130, the polymer layer thus arranged forms at least part of the first polymer layer 130. If the plywood board, after hot pressing, did comprise the first polymer layer 130, the polymer layer thus arranged forms another polymer layer, or form a part of the first polymer layer 130, such as a sub-layer. In particular, Figs. 4c2 and 4c3 refer to the case, wherein the plywood board does not comprise the first polymer layer 130 after hot pressing. In particular, Figs. 4b2 and 4b3 refer to the case, wherein the plywood board comprises the first polymer layer 130 after hot pressing.

The embodiments of Figs. 4b1 to 4c3 further comprise
- arranging the second polymer layer 210 such that the first polymer layer 130 is arranged in between the plywood board and the second polymer layer 210.

As discussed above, and with reference to Fig. 2c, the panel comprises a third polymer layer 140 and may further comprise fourth polymer layer 220.

The embodiments of corresponding methods for manufacturing a panel comprise
- optionally, arranging a third polymer layer 140 to the first veneer layer 110a or the second veneer layer 110b such that the first veneer layer 110a and the second veneer layer 110b are left in between the third polymer layer 140 and the first polymer layer 130; and
- arranging a fourth polymer layer 220 to (i) the third polymer layer 130, (ii) the first veneer layer 110a, or (iii) the second veneer layer 110b such that the first veneer layer 110a and the second veneer layer 110b are left in between the fourth polymer layer 220 and the first polymer layer 130. In case the structure comprises the third polymer layer 140, also the third polymer layer 140 is left in between the fourth polymer layer 220 and the first polymer layer 130.

Figures 5a1 to 5d describe some further embodiments of plywood panels 200. Preferable uses will be discussed. Moreover, implications for the method for manufacturing will be discussed.

Figure 5a1 shows, in a side view, a plywood panel according to an embodiment of the invention. The veneer layers 110 comprise wood. The adhesive 120 in between the veneer layers comprises phenolic resin. On a first side of the panel, the first polymer layer 130 and the second polymer layer 210 are arranged. The first polymer layer comprises phenolic resin. The second polymer layer 210 is removable from the first polymer layer. The second polymer layer 210 comprises at least one of polypropylene (PP), polyethylene (PE), and polyamide (PA).

On a second side of the panel, a third polymer layer 140 is arranged. The third polymer layer comprises three sub-layers 140a, 140b, and 140c, as depicted in the figure. A first sub-layer 140a, wherein the first sub-layer 140a is in contact with a wooden layer comprises phenolic resin. A second sub-layer 140b, wherein the second sub-layer 140b is in contact with the first sub-layer 140a comprises polyamide. A third sub-layer 140c, wherein the third sub-layer 140c is in contact with the second sub-layer 140b comprises phenolic resin. All the sub-layers 140a to 140c may be attached to the structure in one hot press process, as discussed above. However, it is also possible that only the first sub-layer 140a is attached to the structure in a hot press process, as discussed above. Thereafter the other sub-layers 140b, 140c can be processed onto the panel. The application of the other sub-layers 140b, 140c may be done in an elevated temperature, such as one discussed above. The application of the other sub-layers 140b, 140c may be done in an elevated pressure, such as one discussed above.

Referring to Fig. 5a2, the panel of Fig. 5a1 may be used e.g. in a vehicle or trailer flooring. The second polymer layer 210 may be removed, thereby exposing the clean first polymer layer 130. The clean first polymer layer 130 may be attached to a frame 300 using adhesive 310. Preferably an adhesive comprising polyurethane (PU) is used, as discussed above. The frame 300 may comprise longitudinal and/or transverse beams, to which the panels may be attached.

In order to ensure sufficient strength, the thickness of the panel 200 of Figs. 5a1 and 5b2 is preferably e.g. at least 15 mm or at least 17 mm, or at least 20 mm. Moreover, the third polymer layer 140 (i.e. the surface construction comprising the sub-layers 140a, 140b, and 140c) is preferably water proof or humid proof in the sense discussed above in the context of the second polymer layer 210.

In a light trailer embodiment, sufficient strength of the panel may be achieved by the thickness 8 mm or 9 mm. Thus in these embodiment, the thickness of the panel is preferably one of: at least 8 mm, more than 8 mm, at least 9 mm, and more than 9 mm. Moreover, in a light trailer, the panel itself should be reasonable light. Thus, in these embodiments, the thickness is preferably one of: at most 18 mm, less than 18 mm, at most 28 mm, and less than 28 mm.

In a vehicle or a heavy trailer, more strength may be needed from a panel. Thus in these embodiment, the thickness of the panel is preferably one of: at least 12 mm, more than 12 mm, at least 14 mm, and more than 14 mm. Moreover, the panel itself should be reasonable light. Thus, in these embodiments, the thickness is preferably one of: at most 40 mm, less than 40 mm, at most 35 mm, and less than 35 mm.

In some these embodiments, a veneer layer comprises birch. In some these embodiments, all veneer layers comprise birch. Birch is known to have good strength in relation to its weight. Moreover, due to its density, birch has a higher strength than e.g. beech. Still further, the moisture swelling properties of birch are good.

Figure 5b shows, in a side view, a plywood panel according to an embodiment of the invention. The veneer layers 110 comprise wood. The adhesive 120 in between the veneer layers 110 comprises phenolic resin. On a first side of the panel, the first polymer layer 130 and the second polymer layer 210 are arranged. The first polymer layer comprises phenolic resin. The second polymer layer 210 is removable from the first polymer layer. The second polymer layer 210 comprises at least one of polypropylene (PP), polyethylene (PE), and polyamide (PA).

On a second side of the panel, a third polymer layer 140 is arranged. The third polymer layer 140 may comprise phenolic resin. The third polymer layer 140 may comprise other polymer, such as polypropylene and/or polyethylene; as discussed above.

The third polymer layer 140 is preferably water proof or humid proof in the sense discussed above in the context of the first polymer layer 210.

Figure 5c shows, in a side view, a plywood panel according to an embodiment of the invention. The veneer layers 110 comprise wood. The adhesive 120 in between the veneer layers 110 comprises phenolic resin. On a first side of the panel, the first polymer layer 130 and the second polymer layer 210 are arranged. The first polymer layer 130 comprises a first sub-layer 130a and a second sub-layer 130b. The first sub-layer 130a is arranged in contact with a veneer layer 110. The first sub-layer may comprise e.g. at least one of phenolic resin, polyurethane, and ethylene-vinyl-acetate. The second sub-layer 130b is arranged in contact with the first sub-layer 130a. The first second sub-layer may comprise e.g. polypropylene. In an embodiment, at least a sub-layer of a polymer layer comprises adhesive that bonds in a relatively low temperature. E.g. polyurethane bonds to a plywood panel at a relatively low temperature. In this way, the first polymer layer 130 or at least a sub-layer of it may be applied to a plywood panel at the low temperature. The low temperature may be e.g. less than 120 °C, such as less than 100°C.

The second polymer layer 210 is attached to the first polymer layer 130. In particular the second polymer layer 210 is attached to the second sub-layer 130b. The second polymer layer 210 is removable from the first polymer layer 130. The second polymer layer 210 comprises at least one of polypropylene (PP), polyethylene (PE), and polyamide (PA).

On a second side of the panel, a third polymer layer 140 is arranged. The third polymer layer 140 may comprise phenolic resin. The third polymer layer 140 may comprise other polymer, such as polypropylene and/or polyethylene; as discussed above.

The third polymer layer 140 is preferably water proof or humid proof in the sense discussed above in the context of the first polymer layer 210.

Figure 5d shows, in a side view, a panel according to an embodiment of the invention. The layers 110 comprise wood. The adhesive 120 in between the layers comprises thermoplastic material. Different thermoplastic materials were discussed above. The thermoplastic material 120 allows for bending the panel at an elevated temperature, wherein the thermoplastic material has malted. The first polymer layer 130 comprises maleic anhydride polyethylene (MAPE). The second polymer layer 210 comprises at least one of polypropylene (PP), polyethylene (PE), and polyamide (PA).

As shown in the figure 5d, the panel 200 comprises the third polymer layer 140. The third polymer layer 140 comprises maleic anhydride polyethylene (MAPE). The panel may comprise a fourth polymer layer 220 as discussed above.

## Claims

1. A plywood panel comprising
- a first veneer layer comprising wood,
- a second veneer layer comprising wood,
- adhesive in between the first veneer layer and the second veneer layer,
- on a first side of the plywood panel, a first polymer layer attached to the first veneer layer or the second veneer layer and having a first side and a second side such that
- the first and the second veneer layers are arranged on the first side of the first polymer layer, the plywood panel further comprising
- a second polymer layer attached to the second side of the first polymer layer, wherein
- at least part of the second polymer layer is removable from the first polymer layer,
**characterized in that** the plywood panel comprises, on a second side of the panel
- a third polymer layer attached to the second veneer layer or the first veneer layer, respectively, and having two sides such that the first veneer layer and the second veneer layer are arranged on a first side of the third polymer layer.

2. The plywood panel of claim 1, wherein
- the first polymer layer comprises at least one of polypropylene, polyethylene, maleic anhydride polypropylene, maleic anhydride polyethylene, and phenolic resin.

3. The panel of claim 1 or 2, wherein the plywood panel has
- a first adhesion strength between the second polymer layer and the first polymer layer and
- a second adhesion strength between the first polymer layer and the first veneer layer or the second veneer layer, wherein
- the second adhesion strength is greater than the first adhesion strength, and
- the first adhesion strength is from 0.05 N/mm to 1.5 N/mm.

4. The panel of any of the claims 1 to 3, wherein
- optionally, the second polymer layer comprises at least two sub-layers, and
- the second polymer layer comprises at least one of polypropylene (PP), polyethylene (PE), and polyamide (PA).

5. The panel of any of the claims 1 to 4, wherein
- the gloss of an exposed area of the first polymer layer is at most 15 GU, wherein the exposed area is exposed by the removal of the second polymer layer from the first polymer layer, and wherein
- the gloss is measured at an angle of incident of 60 degrees.

6. The panel of any of the claims 1 to 5, wherein
- the first polymer layer comprises the same material as the adhesive in between the first veneer layer and the second veneer layer.

7. The panel of any of the claims 1 to 6, comprising
- a fourth polymer layer having two sides and attached to the second side of the third polymer layer, such that the first polymer layer, the second polymer layer, the first veneer layer, and the second veneer layer are arranged on a first side of the fourth polymer layer, wherein
- the fourth polymer layer is removable from the third polymer layer.

8. Use of the panel of any of the claims 1 to 7, comprising
- removing at least part of the second polymer layer to expose a clean area of the first polymer layer and
- attaching the clean area of the first polymer layer to a structure using second adhesive.

9. The use of claim 8, wherein
- the clean area of the first polymer layer is attached to a frame of a vehicle or a trailer, wherein the frame comprises metal,
- second adhesive is arranged in between the frame and the first polymer layer, and
- the second adhesive comprises polyurethane.

10. Use of the panel of any of the claims 1 to 6, comprising
- sawing or machining the panel to remove material from the panel and
- removing at least part of the second polymer layer after removing the material.

11. A method for manufacturing the panel of any of the claims 1 to 6, comprising
- arranging available a first veneer layer comprising wood,
- arranging available adhesive,
- arranging a second veneer layer comprising wood, such that the adhesive is left in between the first veneer layer and the second veneer layer,
- arranging a first polymer layer comprising a first side and a second side such that the first veneer layer and the second veneer layer are arranged on the first side of the first polymer layer,
- arranging a second polymer layer on the second side of the first polymer layer,
- arranging a third polymer layer to the first veneer layer or the second veneer layer such that the first veneer layer and the second veneer layer are left in between the third polymer layer and the first polymer layer, and
- hot pressing a structure comprising at least the first veneer layer, the adhesive, and the second veneer layer at a temperature under a pressure for a time, **characterized by**
- arranging the second polymer layer in such a way that at least part of the second polymer layer is removable from the first polymer layer.

12. The method of claim 11, wherein
- the temperature is from 0 °C to 200 °C,
- the pressure is from 0.001 MPa to 4 MPa, and
- the time is from 0.1 s to 10 h.

13. The method of claim 11 or 12, comprising
- forming a structure by
∘ arranging available the first veneer layer comprising wood,
∘ arranging available the adhesive,
∘ arranging the second veneer layer comprising wood, such that the adhesive is left in between the first veneer layer and the second veneer layer,
∘ optionally, arranging the first polymer layer comprising a first side and a second side such that the first veneer layer and the second veneer layer are arranged on the first side of the first polymer layer,
- hot pressing the structure in a temperature under a pressure for a time to produce a plywood board,
- optionally, arranging a polymer layer to the plywood board, wherein the polymer layer is arranged to the plywood board at least if the plywood board does not comprise the first polymer layer, whereby the polymer layer forms at least part of the first polymer layer of the plywood board, and
- arranging the second polymer layer such that the first polymer layer is arranged in between the plywood board and the second polymer layer.

14. The method of claim 11 or 12, comprising
- forming a structure by
∘ arranging available the first veneer layer comprising wood,
∘ arranging available the adhesive,
∘ arranging the second veneer layer comprising wood, such that the adhesive is left in between the first veneer layer and the second veneer layer,
∘ arranging the first polymer layer comprising a first side and a second side such that the first veneer layer and the second veneer layer are arranged on the first side of the first polymer layer, and
arranging the second polymer layer on the second side of the first polymer layer; and the method comprises
- hot pressing the structure at a temperature under a pressure for a time to produce the plywood panel.

15. The method of any of the claims 11 to 14, comprising- arranging a fourth polymer layer to the third polymer layer, such that the first veneer layer and the second veneer layer are left in between the fourth polymer layer and the first polymer layer.

## Patentansprüche

1. Sperrholzplatte, die Folgendes aufweist:
- eine erste Furnierschicht bestehend aus Holz,
- eine zweite Furnierschicht bestehend aus Holz,
- Klebstoff zwischen der ersten Furnierschicht und der zweiten Furnierschicht,
- an einer ersten Seite der Sperrholzplatte, eine erste Polymerschicht, die an der ersten Furnierschicht oder der zweiten Furnierschicht befestigt ist und eine erste Seite und eine zweite Seite aufweist, derart, dass
- die erste und die zweite Furnierschicht an der ersten Seite der ersten Polymerschicht angebracht sind, wobei die Sperrholzplatte darüber hinaus Folgendes aufweist:
- eine zweite Polymerschicht, die an der zweiten Seite der ersten Polymerschicht angebracht ist, wobei
- mindestens ein Teil der zweiten Polymerschicht von der ersten Polymerschicht entfernbar ist,
**dadurch gekennzeichnet, dass** die Sperrholzplatte an der zweiten Seite der Platte Folgendes aufweist:
- eine dritte Polymerschicht, die an der zweiten Furnierschicht bzw. der ersten Furnierschicht angeordnet ist und zwei Seiten aufweist, derart, dass die erste Furnierschicht und die zweite Furnierschicht an einer ersten Seite der dritten Polymerschicht angebracht sind.

2. Sperrholzplatte gemäß Anspruch 1, wobei
- die erste Polymerschicht mindestens eines der Folgenden aufweist: Polypropylen, Polyethylen, Maleinsäureanhydrid-Polypropylen, Maleinsäureanhydrid-Polyethylen und Phenolharz.

3. Platte gemäß Anspruch 1 oder 2, wobei die Sperrholzplatte Folgendes aufweist:
- eine erste Adhäsionskraft zwischen der zweiten Polymerschicht und der ersten Polymerschicht und
- eine zweite Adhäsionskraft zwischen der ersten Polymerschicht und der ersten Furnierschicht oder der zweiten Furnierschicht, wobei
- die zweite Adhäsionskraft größer als die erste Adhäsionskraft ist, und
- die erste Adhäsionskraft zwischen 0,05 N/mm und 1,5 N/mm liegt.

4. Platte gemäß den Ansprüchen 1 bis 3, wobei
- optional die zweite Polymerschicht mindestens zwei Teilschichten aufweist, und
- die zweite Polymerschicht mindestens eines der Folgenden aufweist: Polypropylen (PP), Polyethylen (PE) und Polyamid (PA).

5. Platte gemäß einem der Ansprüche 1 bis 4, wobei
- der Glanz einer exponierten Fläche der ersten Polymerschicht höchstens 15 GU beträgt, wobei die exponierte Fläche durch Entfernen der zweiten Polymerschicht von der ersten Polymerschicht freigelegt wird, und wobei
- der Glanz bei einem Einfallwinkel von 60° gemessen wird.

6. Platte gemäß einem der Ansprüche 1 bis 5, wobei
- die erste Polymerschicht dasselbe Material wie der Klebstoff zwischen der ersten Furnierschicht und der zweiten Furnierschicht aufweist.

7. Platte gemäß einem der Ansprüche 1 bis 6, die Folgendes aufweist:
- eine vierte Polymerschicht mit zwei Seiten und angebracht an der zweiten Seite der dritten Polymerschicht, derart, dass die erste Polymerschicht, die zweite Polymerschicht, die erste Furnierschicht und die zweite Furnierschicht an einer ersten Seite der vierten Polymerschicht angebracht sind, wobei
- die vierte Polymerschicht von der dritten Polymerschicht entfernbar ist.

8. Verwendung der Platte gemäß einem der Ansprüche 1 bis 7, die Folgendes umfasst:
- Entfernen von mindestens einem Teil der zweiten Polymerschicht, um eine saubere Fläche der ersten Polymerschicht freizulegen und
- Anbringen der sauberen Fläche der ersten Polymerschicht an einer Struktur unter Verwendung eines zweiten Klebstoffs.

9. Verwendung gemäß Anspruch 8, wobei
- die saubere Fläche der ersten Polymerschicht an einem Rahmen eines Fahrzeugs oder eines Anhängers befestigt ist, wobei der Rahmen Metall aufweist,
- der zweite Klebstoff zwischen dem Rahmen und der ersten Polymerschicht angebracht ist, und
- der zweite Klebstoff Polyurethan aufweist.

10. Verwendung der Platte gemäß einem der Ansprüche 1 bis 6, die Folgendes umfasst:
- Sägen oder Bearbeiten der Platte zum Entfernen von Material von der Platte, und
- Entfernen von mindestens einem Teil der zweiten Polymerschicht nach Entfernen des Materials.

11. Ein Verfahren zur Herstellung der Platte gemäß einem der Ansprüche 1 bis 6, das Folgendes umfasst:
- Vorsehen einer ersten Furnierschicht bestehend aus Holz,
- Vorsehen von Klebstoff,
- Vorsehen einer zweiten Furnierschicht bestehend aus Holz, so sich dass der Klebstoff zwischen der ersten Furnierschicht und der zweiten Furnierschicht befindet,
- Anordnen einer ersten Polymerschicht, die eine erste Seite und eine zweite Seite aufweist, derart, dass die erste Furnierschicht und die zweite Furnierschicht an der ersten Seite der ersten Polymerschicht angebracht sind,
- Anordnen einer zweiten Polymerschicht an der zweiten Seite der ersten Polymerschicht,
- Anordnen einer dritten Polymerschicht an der ersten Furnierschicht oder der zweiten Furnierschicht, derart, dass sich die erste Furnierschicht und die zweite Furnierschicht zwischen der dritten Polymerschicht und der ersten Polymerschicht befinden, und
- Heißpressen einer Struktur, die mindestens aus der ersten Furnierschicht, dem Klebstoff und der zweiten Furnierschicht besteht, bei einer Temperatur unter einem Druck für eine gewisse Zeit, **gekennzeichnet durch**
- Anordnen der zweiten Polymerschicht, derart, dass mindestens ein Teil der zweiten Polymerschicht von der ersten Polymerschicht entfernbar ist.

12. Verfahren gemäß Anspruch 11, wobei
- die Temperatur zwischen 0 °C und 200 °C liegt,
- der Druck zwischen 0,001 MPa und 4 MPa liegt, und
- die Zeit zwischen 0,1 s und 10 h liegt.

13. Verfahren gemäß Anspruch 11 oder 12, das Folgendes umfasst:
- Bilden einer Struktur durch
∘ Vorsehen der ersten Furnierschicht bestehend aus Holz,
∘ Vorsehen des Klebstoffs,
∘ Vorsehen der zweiten Furnierschicht bestehend aus Holz, derart, dass sich der Klebstoff zwischen der ersten Furnierschicht und der zweiten Furnierschicht befindet,
∘ optionales Anordnen der ersten Polymerschicht mit einer ersten Seite und einer zweiten Seite, derart, dass die erste Furnierschicht und die zweite Furnierschicht an der ersten Seite der ersten Polymerschicht angeordnet sind,
- Heißpressen der Struktur bei einer Temperatur unter einem Druck für eine gewisse Zeit zur Herstellung der Sperrholzplatte,
- optionales Anordnen einer Polymerschicht an der Sperrholzplatte, wobei die Polymerschicht an der Sperrholzplatte zumindest angeordnet wird, falls die Sperrholzplatte die erste Polymerschicht nicht aufweist, wobei die Polymerschicht mindestens einen Teil der ersten Polymerschicht der Sperrholzplatte bildet, und
- Anordnen der zweiten Polymerschicht, derart, dass die erste Polymerschicht zwischen der Sperrholzplatte und der zweiten Polymerschicht angeordnet ist.

14. Verfahren gemäß Anspruch 11 oder 12, das Folgendes umfasst:
- Bilden einer Struktur durch
∘ Vorsehen der ersten Furnierschicht bestehend aus Holz,
∘ Vorsehen des Klebstoffs,
∘ Vorsehen der zweiten Furnierschicht bestehend aus Holz, derart, dass sich der Klebstoff zwischen der ersten Furnierschicht und der zweiten Furnierschicht befindet,
∘ Vorsehen der ersten Polymerschicht, die eine erste Seite und eine zweite Seite aufweist, derart, dass die erste Furnierschicht und die zweite Furnierschicht an der erste Seite der ersten Polymerschicht angebracht sind, und
Anordnen der zweiten Polymerschicht an der zweiten Seite der ersten Polymerschicht; und das Verfahren Folgendes umfasst:
- Heißpressen der Struktur bei einer Temperatur unter einem Druck für eine gewisse Zeit zur Herstellung der Sperrholzplatte.

15. Verfahren gemäß einem der Ansprüche 11 bis 14, das das Anordnen einer vierten Polymerschicht an der dritten Polymerschicht umfasst, derart, dass sich die erste Furnierschicht und die zweite Furnierschicht zwischen der vierten Polymerschicht und der ersten Polymerschicht befinden.

## Revendications

1. Panneau de contre-plaqué, comprenant :
- une première couche de placage comprenant du bois,
- une deuxième couche de placage comprenant du bois,
- un adhésif entre la première couche de placage et la deuxième couche de placage,
- sur un premier côté du panneau de contre-plaqué, une première couche de polymère attachée à la première couche de placage ou à la deuxième couche de placage et présentant un premier côté et un deuxième côté de telle manière que
- les première et deuxième couches de placage sont agencées sur le premier côté de la première couche de polymère, le panneau de contre-plaqué comprenant en outre
- une deuxième couche de polymère attachée au deuxième côté de la première couche de polymère, dans lequel
- au moins une partie de la deuxième couche de polymère peut être retirée de la première couche de polymère,
**caractérisé en ce que** le panneau de contre-plaqué comprend, sur un deuxième côté du panneau,
- une troisième couche de polymère attachée à la deuxième couche de placage ou à la première couche de placage, respectivement, et présentant deux côtés de telle manière que la première couche de placage et la deuxième couche de placage sont agencées sur un premier côté de la troisième couche de polymère.

2. Panneau de contre-plaqué selon la revendication 1, dans lequel
- la première couche de polymère comprend au moins un parmi du polypropylène, polyéthylène, du polypropylène greffé anhydride maléique, du polyéthylène greffé anhydride maléique, et de la résine phénolique.

3. Panneau selon la revendication 1 ou 2, dans lequel le panneau de contre-plaqué présente
- une première force adhésive entre la deuxième couche de polymère et la première couche de polymère et
- une deuxième force adhésive entre la première couche de polymère et la première couche de placage ou la deuxième couche de placage, dans lequel
- la deuxième force adhésive est supérieure à la première force adhésive, et
- la première force adhésive est comprise dans la plage allant de 0,05 N/mm à 1,5 N/mm.

4. Panneau selon l'une quelconque des revendications 1 à 3, dans lequel
- éventuellement, la deuxième couche de polymère comprend au moins deux sous-couches, et
- la deuxième couche de polymère comprend au moins un parmi du polypropylène (PP), du polyéthylène (PE), et du polyamide (PA).

5. Panneau selon l'une quelconque des revendications 1 à 4, dans lequel
- la brillance d'une zone exposée de la première couche de polymère est d'au moins 15 GU, dans lequel la zone exposée est exposée grâce au retrait de la deuxième couche de polymère à partir de la première couche de polymère, et dans lequel
- la brillance est mesurée avec un angle incident de 60 degrés.

6. Panneau selon l'une quelconque des revendications 1 à 5, dans lequel
- la première couche de polymère comprend le même matériau que l'adhésif présent entre la première couche de placage et la deuxième couche de placage.

7. Panneau selon l'une quelconque des revendications 1 à 6, comprenant
- une quatrième couche de polymère présentant deux côtés et attachée au deuxième côté de la troisième couche de polymère, de telle manière que la première couche de polymère, la deuxième couche de polymère, la première couche de placage, et la deuxième couche de placage sont agencées sur un premier côté de la quatrième couche de polymère, dans lequel
- la quatrième couche de polymère peut être retirée de la troisième couche de polymère.

8. Utilisation de panneau selon l'une quelconque des revendications 1 à 7, comprenant les étapes consistant à
- retirer au moins une partie de la deuxième couche de polymère afin d'exposer une zone propre de la première couche de polymère et
- attacher la zone propre de la première couche de polymère à une structure en utilisant un deuxième adhésif.

9. Utilisation selon la revendication 8, dans laquelle
- la zone propre de la première couche de polymère est attachée à un châssis d'un véhicule ou d'une remorque, dans laquelle le châssis comprend du métal,
- un deuxième adhésif est agencé entre le châssis et la première couche de polymère, et
- le deuxième adhésif comprend du polyuréthane.

10. Utilisation du panneau selon l'une quelconque des revendications 1 à 6, comprenant les étapes consistant à
- scier ou usiner le panneau afin de retirer du matériau à partir du panneau et
- retirer au moins une partie de la deuxième couche de polymère après retrait dudit matériau.

11. Procédé permettant de fabriquer le panneau selon l'une quelconque des revendications 1 à 6, comprenant les étapes consistant à
- fournir une première couche de placage comprenant du bois
- fournir un adhésif,
- fournir une deuxième couche de placage comprenant du bois, de telle manière que l'adhésif est laissé entre la première couche de placage et la deuxième couche de placage,
- fournir une première couche de polymère comprenant un premier côté et un deuxième côté de telle manière que la première couche de placage et la deuxième couche de placage sont agencées sur le premier côté de la première couche de polymère,
- fournir une deuxième couche de polymère sur le deuxième côté de la première couche de polymère,
- fournir une troisième couche de polymère sur la première couche de placage ou sur la deuxième couche de placage de telle manière que la première couche de placage et la deuxième couche de placage sont laissées entre la troisième couche de polymère et la première couche de polymère, et
- compresser à chaud une structure comprenant au moins la première couche de placage, l'adhésif, et la deuxième couche de placage à une certaine température sous une certaine pression pendant un certain temps, **caractérisé par** l'étape consistant à
- fournir la deuxième couche de polymère de telle manière qu'au moins une partie de la deuxième couche de polymère peut être retirée de la première couche de polymère.

12. Procédé selon la revendication 11, dans lequel
- la température est comprise dans la plage allant 0°C à 200°C,
- la pression est comprise dans la plage allant 0,001 MPa à 4 MPa, et
- le temps est compris dans la plage allant de 0,1 seconde à 10 heures.

13. Procédé selon la revendication 11 ou 12, comprenant les étapes consistant à
- former une structure par
• fourniture de la première couche de placage comprenant du bois,
• fourniture de l'adhésif,
• fourniture de la deuxième couche de placage comprenant du bois, de telle manière que l'adhésif est laissé entre la première couche de placage et la deuxième couche de placage,
• éventuellement, fournir la première couche de polymère comprenant un premier côté et un deuxième côté de telle manière que la première couche de placage et la deuxième couche de placage sont agencées sur le premier côté de la première couche de polymère,
- compresser à chaud la structure à une certaine température sous une certaine pression pendant un certain temps afin de produire une planche de contre-plaqué,
- éventuellement, fournir une couche de polymère sur la planche de contre-plaqué, dans lequel la couche de polymère est agencée sur la planche de contre-plaqué au moins si la planche de contre-plaqué ne comprend pas la première couche de polymère, grâce à quoi la couche de polymère forme au moins une partie de la première couche de polymère de la planche de contre-plaqué, et
- fournir la deuxième couche de polymère de telle manière que la première couche de polymère est agencée entre la planche de contre-plaqué et la deuxième couche de polymère.

14. Procédé selon la revendication 11 ou 12, comprenant les étapes consistant à
- former une structure par
• fourniture de la première couche de placage comprenant du bois,
• fourniture de l'adhésif,
• fourniture de la deuxième couche de placage comprenant du bois, de telle manière que l'adhésif est laissé entre la première couche de placage et la deuxième couche de placage,
• fourniture de la première couche de polymère comprenant un premier côté et un deuxième côté de telle manière que la première couche de placage et la deuxième couche de placage sont agencées sur le premier côté de la première couche de polymère, et
• fournir la deuxième couche de polymère sur le deuxième côté de la première couche de polymère ;
et le procédé comprend l'étape consistant à
- compresser à chaud la structure à une certaine température sous une certaine pression pendant un certain temps afin de produire le panneau de contre-plaqué.

15. Procédé selon l'une quelconque des revendications 11 à 14, comprenant l'étape consistant à
- fournir une quatrième couche de polymère sur la troisième couche de polymère, de telle manière que la première couche de placage et la deuxième couche de placage sont laissées entre la quatrième couche de polymère et la première couche de polymère.
